# EUROPEAN PATENT APPLICATION

(11) **EP 1 675 054 A1**
(43) Date of publication of application: **28.06.2006**
(21) Application number: 05110831.4
(22) Date of filing: 16.11.2005
(51) Int. Cl.: G06Q 10/00

(54) **Adjudication means in a system managing the service levels provided by service providers**

(30) Priority: 22.12.2004 EP 04300936
(71) Applicant: International Business Machines Corporation, Armonk, NY 10504 (US)
(72) Inventor: Berthaud, Jean Marc, 06270, Villeneuve-Loubet (FR); Dalsky, Joel, IL 60192, Hoffman Estates (US); Fang, Shih-Chung, IL 60173, Schaumburg (US); Tsiao, Lee, IL 60195, Hoffman Estates (US)
(74) Representative: Etorre, Yves Nicolas

(57) **Abstract**

System for managing a Service Level provided by a Service Provider to a customer comprising a processing engine (10) for transforming (14) measurement data composed of data point(s) into operational data using service time profiles and Service Level business logics, and evaluating (16) the operational data in order to produce Service Level results and qualified operational data. This system comprises adjudication means (12) for adjudicating the measurement data before transforming them into operational data wherein the adjudication is made by using a set of adjudication elements (30) describing the modifications to bring. The adjudication means include a rule instance associated with each one of said adjudication elements, this rule instance comprising fields for identifying all the parameters of the Service Level being managed and a field containing a specific rule defining the command used to adjudicate the measurement data.

## Description

### Technical field

The invention relates to service management and service presentation systems wherein measurement data regarding services delivered by Service Providers to customers are gathered and handled to compute and communicate service indicators defined in Service Level agreements and, in particular, relates to adjudication means for adjudicating any type of measurement data in a system managing the Service Levels provided by Service Providers.

### Background

A Service Provider (SP) provides or manages resources for its customers. A resource can be a server, a particular application on a server, a networking device, people in a help desk to answer users, people to fix problems, people to manage and change systems configuration and location, etc. or a complex solution made of multiple elements to accomplish or support a customer business process. The Service Provider and the customer can be different firms, or different departments in a large global enterprise where departments are organized as support services for other departments, e.g. Marketing, Research, Sales, Production.

Normally, a Service Level Agreement (SLA) is signed between a provider and a customer to define the role of each party and to remove any ambiguity from the business relationship.

Such a SLA:
- Identifies the parties involved in the agreement.
- Describes the service to be provided, and identifies in a measurable and quantifiable manner indicators of the quality of the service on which obligations will be set, with a possible series of exceptions and stipulations in the way to calculate these indicators.
- Defines the obligations, called Service Levels (SL), to be met on the identified indicators, so that the expected quality of the delivered services is set in an un-ambiguous manner.
- Defines the agreement period for which these obligations are set forward.
- Pre-defines penalties to be paid/executed by the SP if the commitment(s) is (are) not met. If a commitment is exceeded, a reward can also be predefined, to be paid by the customer.
- Also defines reporting policies, corrective actions, dispute resolution procedures, termination criteria, intellectual property...

A SLA is encountered when considering utilities to be trusted "always on" services like water, electricity, gas, telephone or e-Business On Demand. In fact, a SLA exists when a specific service offer including commitments is engaged with a customer.

By itself, a SLA does not bring any change in the level of service delivered. The Service Provider and/or the customer need to implement a Service Level Management (SLM) program that will actually result in higher levels of services. Indeed, SLAs only indicate whether or not a service is reaching agreed levels. When not met, the issue is to determine what caused the violation, may be how to improve the service, or change the SLA or the provider. The Service Level Management begins with the development of new Service Levels for a new contract and continues throughout the life of the contract to ensure Service Level commitments are met and maintained.

The Service Level Management is commonly identified as the activities of:
- negotiating, identifying and agreeing the measurable services that support the Business Process of a customer, and defining the SLA articulation in an offering for service with Service Level Objectives (SLO) also known as Service Level Targets (SLT),
- monitoring resources used to deliver a service and capturing data on how well these resources perform from monitors or from logs,
- calculating intermediate and high level Service Levels results or scores using the predefined service parameters formulae (called metrics) and taking into account all kinds of exceptions that can occur, assessing attainment versus commitments and possible penalties or rewards,
- assessing impact of operational outages or degradations in terms of SLAs (services) and financial impacts, alerting in real-time of possible or effected outages, diagnosing problems for resolution, enforcing corrective actions wherever possible to regulate the delivery system and therefore try to proactively guarantee the achievement of obligations,
- reporting to the provider and the customer on real numbers versus contractual numbers, and sealing final numbers to be used for rebates or rewards,
- rebating to customers when commitments are not achieved, or rewarding the provider when commitments are exceeded, and
- refining, improving and reviewing SLA definitions, Service Levels and services that support the customer's Business Process.

Today, there are SLA Management Systems which are automated for managing SLAs such as IBM Tivoli Service Level Advisor, Computer Associates SLM, Digital Fuel or InfoVista. They are built to accomplish, at least, a minimum set of tasks such as capturing data from monitoring systems, and they participate or supply information to next steps such as alerting, enforcing or reporting.

Some of these systems are sufficiently elaborated to solve the problem of accounting for such situations where an SLA is violated due to Customer's responsibility. In such cases, the result must be revised to reflect the true responsibility of the Service Provider after calculation by these systems. Indeed, very often a piece of the solution used to support the customer business process which is managed by the Service Provider is coming from the customer, or is under the customer's responsibility (shared or not with the Service Provider). This activity will be called Adjudication in the following, and the information input to this activity will be called Adjudication Elements.

However, these systems either enable adjudication through direct modification of data, or employ means specific to each case of adjudication. In the first case, this does not allow to define the adjudication to be applied before all the data to be adjudicated are in the system. The second case corresponds to numerous specific cases depending on the types of data and the situations. Standard ways of doing these cases use adjudication elements specifying modifications for each data points, which can be quite heavy to manage and to use with data feeds like periodical response time measurements containing numerous data points in a SL period. Or they involve code and data structures specific to each measurement domain and adjudication situation and this creates a significant code maintenance problem and a development bottleneck when new domains or situations arise.

Therefore, there is a need for a universal method describing adjudications in order to avoid complex development and information management in those systems, and to allow a quick and efficient creation of modifications for a large amount of data. And yet, this method must allow more optimal and less generic ways of describing and processing adjudication elements to co-exist and to be developed in parallel, and also to be used for specific cases when they are more appropriate.

### Summary of the invention

Accordingly, the object of the invention is, within a system for managing the Service Levels provided by Service Providers to a customer, to provide adjudication means and to achieve a generic method for modifying input data (adjudication) taking into consideration external information elements related to input data (adjudication elements) using a generic format to hold information such as the SLA contract clauses, or such as input from the service manager or other enterprise management systems, to produce new modified input data for Service Level calculations.

The invention therefore relates to a system for managing a Service Level provided by a Service Provider to a customer comprising a processing engine for transforming measurement data into operational data using service time profiles and Service Level business logics, and evaluating the operational data in order to produce Service Level results and qualified operational data. Such a system comprises adjudication means for adjudicating the measurement data before transforming them into operational data wherein the adjudication is made by using a set of adjudication elements describing the modifications to bring, the adjudication means including a rule instance associated with each adjudication element, the rule instance comprising fields for identifying all the parameters of the Service Level being managed and a field containing a specific rule defining the command used to adjudicate the measurement data.

The specific rule is a time based rule relying on the fact that any monitoring data point used in a Service Level has a timestamp attached to it, since Service Levels are always periodical or time related and only data points pertaining to the corresponding period of time must be considered during the evaluation.

A basic set of four commands (exclude, add, modify and include) which can be combined in a simple manner is sufficient to create any controlled modification to sets of measurement data within time ranges.

### Brief description of the drawings

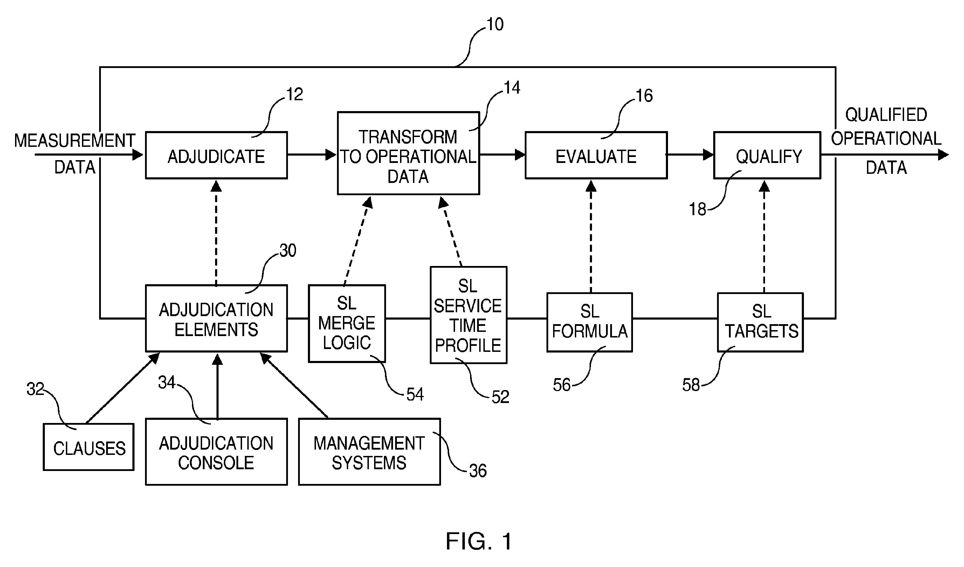

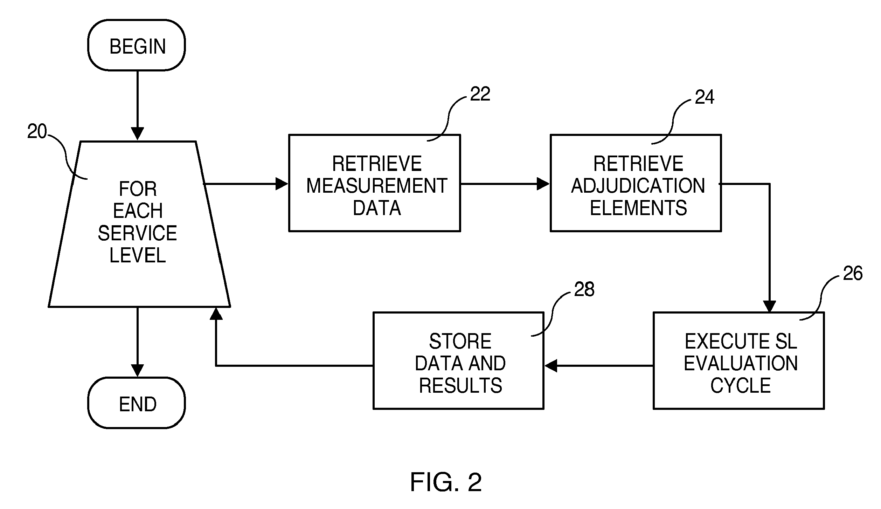

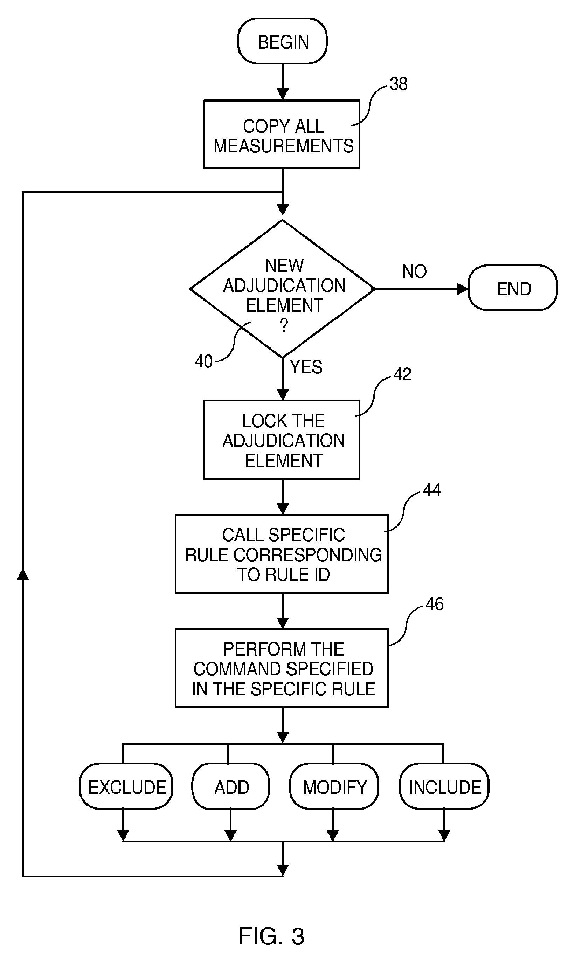

The above and other objects, features and advantages of the invention will be better understood by reading the following more particular description of the invention in conjunction with the accompanying drawings wherein:
■ Fig. 1 is a schematic block-diagram representing the process engine used in the invention and the sequence of steps implemented therein;
■ Fig. 2 is a schematic diagram illustrating the processing cycle implemented for each Service Level; and
■ Fig. 3 is a flow chart of the steps implemented in the process of adjudicating the measurement data.

### Detailed description of the invention

A system according to the invention is composed of a repository of the description of the SLA corresponding to each Service Level, a first datastore for the measurement data, a second datastore for adjudication elements, a third datastore for SL results, operational data, adjudicated data and a processing engine for processing an evaluation cycle for each Service Level (SL).

The processing engine 10, illustrated in Fig. 1, includes the necessary software modules to process the measurement data received as input and to provide operational data as output. As described hereafter, the process performed by the processing engine comprises essentially three main steps, a step 12 of adjudicating the input measurement data in a device according to the invention, a step of transforming the adjudicated data into operational data 14 and a step of evaluating these operational data 16, and an optional step of qualifying the operational data 18. In other words, as illustrated in Fig. 2, the process is implemented for each Service Level 20. First, the measurement data for the Service Level is retrieved (step 22), such measurement data being related to the evaluated Service Level and SL period. Then, all the adjudication elements related to the evaluated SL period are retrieved (step 24), from the second datastore for the adjudication elements and the SL evaluation cycle can be executed (step 26) using SLA description. Finally, the adjudicated data, the qualified operational data when the optional step of qualifying is used, and the SL results are stored (step 28) into the third datastore.

Referring again to Fig. 1, the step of adjudicating 12 is used to reflect the real domain of responsibility of the Service Provider, or to reflect reality because, for some reason, the monitors provide incorrect data. A new set of data must be produced by this step. Although the measurement data have been modified, reference data are still available to be used by other systems requiring the original observed data, or so that changes can be audited since the data can be used for legal purposes.

Adjudication elements 30 can be clauses 32 created at contract signing time and which are valid for the whole Service Level life (exclusion cases, special conditions, limits on resources,...) or can be created, from the adjudication console 34, at any time during the Service Level life by Service Managers when executing their Service Level Management tasks, or automatically from other Enterprise Management systems 36 like Problem and Change Management, using responsibility fields and other information. They must hold a reason for the modifications they bring, which will be shown to the end customer and must be agreed by him, and information about the creator who/which is first authenticated and goes through processes of authorization.

Each "modified" data point contains a list of references to applied adjudication elements and clauses in their specific order of appliance, for auditing, detailed reporting, explanation/customer relationship, and for legal justification and later billing exploitation (rebate or reward). Each adjudication element 30 is locked as soon as it is used so that no more modification can happen to it, for guaranteeing that proper information is available for auditing controls.

This step also supports a parallel information management process whereby the adjudication can be sealed so that no more modification can be made to the Service Level result and other produced data for a given Service Level period, i.e. no more adjudication element can be created for this Service Level period. This corresponds to a process of finalization just before result data are sent to billing systems or used for other legal purposes, and after they have been reviewed and agreed with the customer.

Each time an SL is requested to be evaluated, the process illustrated in Fig. 3 is executed. First, all measurements are copied as adjudicated measurements with an empty modification history chain (step 38), thus enabling to store a history of modifications for each measurement. Then, the process checks whether there is still an adjudication element to apply (step 40) to the set of adjudicated measurements. If it is the case, the adjudication element is locked as mentioned above (step 42). Then, a specific rule corresponding to a rule identification in the adjudication element is called (step 44) according to the principles of the invention.

Indeed, all adjudication elements, whether clauses or not, are expressed as rule instances, with the following fields:
- Identification of the Service Level: an adjudication element is associated to a particular SL. For example, SLAContractId, OrderElementId, MetricId.
- Identification of SL period(s) to be modified: an adjudication element applies to defined Service Level period(s), identified through a start and end date corresponding to the start of a Service Level period, and to the end of a Service Level period. A clause is a particular case going from start of the first Service Level period to infinity (i.e. it is valid until the end of times or until the Service Level end of life).
- Identification of the data feed to be modified (a data feed is a group of data points representing a particular metrics); for example, a MeasurementType_Id, a ComponentTypeId and a Resource_Id or Component_Id field. Some of these specifications can be generic or empty, meaning that the adjudication rule applies to all the measurement data feeds in this Service Level and the given period, which match with the remaining specified parameters.
- User ID, date: the authenticated and authorized identification of the source which has created this element, with the creation date.
- Reason: a reason text for the adjudication.
- Rule ID: applies the internally coded rule to the subset of data identified above. It is used as an index to code to execute in a function table. One of them is the specific rule.
- Specific rule data.

The specific rule allows to create elements to address any case:
- Identification of ranges of data to modify in the selected data feeds, and of a time interval (a Start Time and an End Time) within the selected SL period(s) to apply the following modification command to the corresponding data.
- Modification Command to apply: further explained below.
   Then, the modification command specified in the specific rule is performed (step 46) and, after completion, the process is looped back to the step of determining whether there is a new adjudication element to be processed (step 40). Sequences of adjudication elements with different Modification Commands must allow to apply any business logic/reason to modify data in relation to Service Level calculations in a generic and efficient manner. It was determined that the following set of operations with their associated process is sufficient to achieve any adjudication.
- **Exclude** This command excludes data point(s) from calculations but keeps them in output adjudicated and operational data with a flag indicating they were excluded, so that anybody can control or still know about them. Furthermore, this command modifies time boundaries of data points overlapping with time range so that they do not overlap anymore.
- **Add** This command adds data point(s): when it is determined that, for any reason, some data were missed in the measurements described in the adjudication elements, this is the way to add the missing data. It is also a way to introduce data for non monitored metrics used in Service Levels (i.e. those for which there is no automatic data collection). This is followed by a set of value pairs (separated by ',') to set data point fields.
- **Modify** This command modifies all data point(s) whose start time is in the time range of the adjudication element for the measurements which are in the adjudication element description. It is followed by a set of value pairs (separated by',') to replace current values in the specified portion of data feed by new values.
- **Include** This command is used to cancel the effect of exclusions or modifications to data points. It resets data points to their original values and sets them to be included into SL calculations. Note that the way to cancel the effect of 'Add' adjudication elements is simply to create new 'Exclude' elements excluding the data points they have inserted.

An example of a response time Service Level on a URL would be: "Ignore the response times between <start date> and <end date>, because it is due to an incorrect manipulation by the customer on the server through its backend administration access".

### Implementation specifics:

For 'Modify' and 'Add' adjudication elements, typical value pairs can be:
- date= yyyy.MM.dd hh:mm:ss:SSS z, with SSS in milliseconds and z = timezone code.
- min=value, with value = a double float constant.
- max=value, with value = a double float constant.
- avg=value, with value = a double float constant.
- tot=value, with value = a double float constant.
- smplcnt=value, with value = an integer constant.
- errcnt=value, with value = an integer constant.
- state=value, with value = a string without a `,' in it (no escape sequence).
Note that the adjudication system is cumulative: once an adjudication element has been created and has been used in an evaluation, it cannot be removed. New adjudication elements must be added to cancel its effects. Each Service Level process run goes through the full set of adjudication elements associated to the Service Level for the evaluated period, in the order they were created.

Coming back to Fig. 1, the second step performed by the processing engine 10 is to transform (14) the adjudicated data into operational data by using a service time profile 52 describing the Service Level time logic (also commonly referred to as a service calendar and defining different periods of service with possibly different SLT's), and the specific business logic defined in the Service Level to modify raw data into a more appropriate form for evaluating and producing summary Service Level results.

In addition, each produced operational data point refers back to the original adjudicated measurement data point(s) it comes from, for tracing and auditing purposes. For example, a Service Level time logic can contain critical periods and off-peak hours in a month where different targets are to be achieved, or periods of no service. Monitoring devices and data collection systems have no knowledge of this information which is contract specific, and measurement data points can cover multiple such periods. Appropriate sets of data points need to be produced for generation of Service Level results and comparison with different Service Level targets. And to continue the example, if measurements are coming from different probes monitoring the same resource, they need to be merged by using a logic 54 specified in the Service Level before they can be used for Service Level calculations when evaluating and producing summary Service Level results.

Then, the operational data is evaluated (16) through a Service Level evaluation using a formula 56, specifying which data are to be fed as input, what is the form of data (response time, availability, counts, states), and how the input data should be processed to produce summary intermediate and top Service Level results. There is one set of data produced per business period in the Service Time Profile. The data produced by this step are to be used directly for Service Level attainment comparison, for reporting on Service Levels, and for input to other Enterprise Management systems. It matches what is contractually committed by the provider and represents a negotiated value and quality of the delivered service.

Finally, the operational data resulting from adjudicated data can be optionally qualified (18) with regards to their participation in achieving or degrading results compared to Service Level targets 58 for each business period. This step qualifies produced operational data points with labels like "In profile" (=contributes to good SL result) or "Out of profile" (=contributes to degrading SL result), and with deltas to breaking limit to understand the margin by which a data point is contributing to the high level SL results, whether bad or good (for ex: time remaining before "Out of profile" or violation, for problem resolution times, etc.).

## Claims

1. A system for managing a Service Level provided by a Service Provider to a customer comprising a processing engine (10) for transforming (14) measurement data composed of data point(s) into operational data using service time profiles and Service Level business logics, and evaluating (16) said operational data in order to produce Service Level results and qualified operational data ;
said system being **characterized in that** it comprises adjudication means (12) for adjudicating said measurement data before transforming them into operational data wherein the adjudication is made by using a set of adjudication elements (30) describing the modifications to bring, said adjudication means including a rule instance associated with each one of said adjudication elements, said rule instance comprising fields for identifying all the parameters of the Service Level being managed and a field containing a specific rule defining the command used to adjudicate said measurement data.

2. The system according to claim 1, wherein said command used to adjudicate said measurement data is one of the following operations
*Exclude* which excludes data point(s) from calculations but keeps them in output adjudicated and operational data with a flag indicating they were excluded,
*Add* which adds data point(s) when it is determined that, for any reason, some data were missed in the measurements described in the adjudication elements,
*Modify* which modifies all data point(s) whose start time is in the time range of the adjudication element for the measurements which are in the adjudication element description, and
*Include* which is used to cancel the effect of exclusions or modifications to data point(s) by resetting them to their original values.

3. The system according to claim 2, wherein said adjudication elements (30) used by said adjudicating means (12) are selected amongst clauses (32) created at contract signing level and being valid for the whole Service Level life, elements created from an adjudication console (34) at any time during the Service Level life by Service Level managers, or elements from other enterprise management systems (36).

4. The system according to claim 3, wherein each of said adjudication elements (30) is locked after it has been used by said adjudicating means (12).

5. The system according to claim 4, wherein each adjudicated measurement data point contains a list of references to the adjudication elements which have been used and clauses in their specific order of appliance for auditing, detailed reporting, explanation customer relationship and for legal justification and later billing exploitation.

6. The system according to claim 5, wherein said processing engine (10) uses, for transforming adjudicated data into operational data, a Service Level merge logic (54) to merge several measurement data on the same monitored resource so that the format of initial and transformed data can be precisely defined and a service time profile (52) to split data into separate sets of data for each period.

7. The system according to claims 6, further comprising means (18) for qualifying said operational data after they have been evaluated, this qualification being made by comparing operational data with qualification values determined with regard to Service Level targets for each business period.

8. A method for managing the Service Level provided by Service Providers to a customer comprising the steps of transforming (14) measurement data composed of data point(s) into operational data using service time profiles and Service Level business logics and evaluating (16) said operational data in order to produce Service Level results and qualified operational data ;
said method being **characterized in that** it comprises the step of adjudicating (12) said measurement data before transforming them into operational data wherein the adjudication is made by using a set of adjudication elements (30) describing the modifications to bring, and wherein a rule instance associated with each one of said adjudication elements comprises fields for identifying all the parameters of the Service Level being managed and a field containing a specific rule defining the command used to adjudicate said measurement data

9. The method according to claim 8, wherein said command used to adjudicate said measurement data is one of the following operations
*Exclude* which excludes data point(s) from calculations but keeps them in output adjudicated and operational data with a flag indicating they were excluded,
*Add* which adds data point(s) when it is determined that, for any reason, some data were missed in the measurements described in the adjudication elements,
*Modify* which modifies all data point(s) whose start time is in the time range of the adjudication element for the measurements which are in the adjudication element description, and
*Include* which is used to cancel the effect of exclusions or modifications to data point(s) by resetting them to their original values.

10. The method according to claim 9, wherein said adjudication elements (30) are selected amongst clauses (32) created at contract signing level and being valid for the whole Service Level life, elements created from an adjudication console (34) at any time during the Service Level life by Service Level managers or elements from other enterprise management systems (36).

11. The method according to claim 10, wherein each measurement data point is copied before said step of adjudicating as adjudicated measurement with an empty modification history chain thereby enabling to store an history of modification to each measurement data.

12. The method according to claim 11, wherein each of said adjudication elements (30) is locked after it has been used in said adjudicating step.

13. The method according to claim 12, wherein said step of transforming the adjudicated measurement data into operational data (14) uses a Service Level merge logic (54) to merge several measurement data on the same monitored resource so that the format of initial and transformed data can be precisely defined and a service time profile (52) to split data into separate sets of data for each period.

14. The method according to claim 13, further comprising the step of qualifying (18) said operational data after their evaluation, by comparing said operational data with qualification values for each business period.

15. The method according to claim 14, wherein said step of qualifying the operational data uses Service Level targets (58) for each business period in order to qualify said operational data with labels like "In profile" meaning that these data contribute to good Service Level results or "Out of profile" meaning that these data contribute to degrading Service Level results, and with details to breaking limits to understand the margin by which a measurement data point is contributing to the Service Level results whether bad or good.
